# EUROPEAN PATENT APPLICATION

(11) **EP 4 087 351 A1**
(43) Date of publication of application: **09.11.2022**
(21) Application number: 20914379.1
(22) Date of filing: 14.01.2020
(51) Int. Cl.: H04W 72/12, H04L 5/00

(54) **UPLINK TRANSMISSION METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); XU, Jing, Dongguan, Guangdong 523860 (CN)
(74) Representative: Taor, Simon Edward William
(86) International application number: PCT/CN2020/072100
(87) International publication number: WO 2021/142636

(57) **Abstract**

Disclosed are an uplink transmission method and a terminal device. The method comprises: a terminal device determining a first channel for transmitting first scheduling request information and second uplink information, wherein the second uplink information is generated according to the first uplink information, and a transmission resource of the first scheduling request information overlaps with a transmission resource of the first uplink information; and if a transmission resource of the first channel overlaps with a transmission resource of second scheduling request information, the terminal device transmitting uplink information or an uplink channel according to the first scheduling request information. The present invention solves the technical problem in the prior art in which when two uplink channels overlap, multiplexing transmission is only supported for information having the same priority, and transmission of information having different priorities results in the lower-priority information being discarded, thus resulting in low transmission efficiency.

## Description

### BACKGROUND OF THE DISCLOSURE

### 1. Field of the Disclosure

The present application relates to telecommunication technologies, and more particularly to an uplink transmission method and a terminal device.

### 2. Description of the Related Art

5G New Radio (NR for short, new air interface) supports various types of services, including enhanced Mobile Broadband (eMBB), ultra-reliable low latency (URLLC), etc. Among them, the eMBB service is characterized by large data volume and high data transfer rate. It usually employs a time-domain scheduling unit for transmission in the battlefield and is not sensitive to delay. The feature of the URLLC service is that the generation of data packets is sudden and random, and it has a high demand on delay.

A terminal device transmits a scheduling request (SR) to request a base station to allocate uplink channel resources for transmission of new data. Physical uplink control channel (PUCCH) resources used for transmitting the SR is configured in a semi-static manner by the base station through high-level signalling. The PUCCH resources are periodic. For the URLLC service, it is reasonable to use short periodic PUCCH to transmit a corresponding SR in order to satisfy the needs of delay. For the eMBB service, since it is not sensitive to delay, it is reasonable to use long periodic PUCCH to transmit a corresponding SR in order to increase system efficiency.

In order to satisfy the needs of various types of services at the same time, NR Rel-15 supports multiple SR configurations applied to a same terminal device (or user equipment, UE). The multiple SR configurations correspond to different physical transmission resources (including periodicity and PUCCH resources). Each SR is configured with a corresponding number "scheduling Request ID" and corresponds to a resource number "scheduling Request Resource Id".

For logical channels (which can be used to differentiate service types, for example, the eMBB service and the URLLC service correspond to different logical channels), one logical channel corresponds to one SR configuration at most, but one SR configuration can correspond to multiple logical channels. When new data needs to be transmitted in a certain logical channel, the terminal device uses a PUCCH resource corresponding to the SR configuration of the logical channel to transmit a positive SR. Correspondingly, when the base station receives a positive SR on a certain PUCCH resource, it can be known that there are new data to be transmitted in a logical channel corresponding to a SR configuration to which the PUCCH resource belongs. The base station can perform reasonable physical channel scheduling according to service characteristics of the logical channel.

In the existing NR REL-16 URLLC, two-level priority is supported for uplink information. Only the uplink information with the same priority can be multiplexed for transmission. When an uplink channel with high priority overlaps with an uplink channel with low priority, the channel with low priority is discarded. The priority corresponding to ACK/NACK information is indicated by its corresponding Downlink Control Information (DCI). The priority information for each SR configuration is configured by high-level signalling. The priority corresponding to Channel State Information (CSI) is associated with its transmitted content, and this priority is specified directly by the protocol.

For the technical problem in the existing arts in which when an overlap occurs between two uplink channels, multiplexing for transmission is only supported for the information having the same priority, and the information with low priority will be discarded if the information having different priorities is to be transmitted, thus resulting in low transmission efficiency. So far, no effective solution has been proposed.

### SUMMARY

Embodiments of the present invention provides an uplink transmission method and a terminal device, which at least solve the technical problem in the existing arts in which when an overlap occurs between two uplink channels, multiplexing for transmission is only supported for the information having the same priority, and the information with low priority will be discarded if the information having different priorities is to be transmitted, thus resulting in low transmission efficiency.

In accordance with an aspect of the embodiments of the present invention, an uplink transmission method is provided. The method includes determining, by a terminal device, a first channel for transmitting first scheduling request information and second uplink information, wherein the second uplink information is generated according to first uplink information, and a transmission resource of the first scheduling request information overlaps with the transmission resource of the first uplink information; and if the transmission resource of the first channel overlaps with the transmission resource of second scheduling request information, transmitting, by the terminal device, uplink information or an uplink channel according to the first scheduling request information.

In accordance with another aspect of the embodiments of the present invention, a terminal device is further provided. The terminal device includes a signal transceiving unit and a processing unit. The signal transceiving unit is configured to determine a first channel for transmitting first scheduling request information and second uplink information, wherein the second uplink information is generated according to first uplink information, and a transmission resource of the first scheduling request information overlaps with the transmission resource of the first uplink information. The processing unit is configured to transmit uplink information or an uplink channel according to the first scheduling request information if the transmission resource of the first channel overlaps with the transmission resource of second scheduling request information.

In accordance with still another aspect of the embodiments of the present invention, a non-transitory storage medium is further provided. The non-transitory storage medium includes a stored program, wherein when the program is running, a device equipped with the non-transitory storage medium is controlled to execute the afore-described uplink transmission method.

In accordance with yet another aspect of the embodiments of the present invention, a terminal device is further provided. The terminal device includes a processor and a memory, wherein the memory is configured to store a computer program, and the processor is configured to call and run the computer program stored in the memory to execute the afore-described method.

Transmitting the information with different priorities in the same channel is adopted in the embodiments of the present invention. The terminal device determines the first channel for transmitting the first scheduling request information and the second uplink information, wherein the second uplink information is generated according to the first uplink information, and the transmission resource of the first scheduling request information overlaps with the transmission resource of the first uplink information. The transmission resource of the first channel overlaps with the transmission resource of the second scheduling request information. The terminal device transmits uplink information or uplink channel according to the first scheduling request information. This achieves the purpose of reducing the probability of uplink information being discarded, thereby realizing a technical effect of improving transmission efficiency and further solving the technical problem in the existing arts in which when an overlap occurs between two uplink channels, multiplexing for transmission is only supported for the information having the same priority, and the information with low priority will be discarded if the information having different priorities is to be transmitted, thus resulting in low transmission efficiency.

### BRIEF DESCRIPTION OF THE DRAWINGS

The drawings described here are used to provide a further understanding of the present application and constitute a part of the present application. The exemplary embodiments and corresponding descriptions of the present invention are used to explain the present invention and do not constitute an improper limitation to the present invention. In the drawings:
FIG. 1 is a schematic diagram illustrating a communication system according to an embodiment of the present application.
FIG. 2 is a schematic diagram illustrating a method for transmitting a scheduling request according to an embodiment of the present invention.
FIG. 3 is a schematic diagram illustrating a type of scheduling request transmission in a method for transmitting a scheduling request according to an embodiment of the present invention.
FIG. 4 is a schematic diagram illustrating another type of scheduling request transmission in a method for transmitting a scheduling request according to an embodiment of the present invention.
FIG. 5 is a schematic diagram illustrating still another type of scheduling request transmission in a method for transmitting a scheduling request according to an embodiment of the present invention.
FIG. 6 is a schematic diagram illustrating yet another type of scheduling request transmission in a method for transmitting a scheduling request according to an embodiment of the present invention.
FIG. 7 is a schematic diagram illustrating a terminal device according to an embodiment of the present application.
FIG. 8 is a structural schematic diagram illustrating a communication device provided in an embodiment of the present application.
FIG. 9 is a structural schematic diagram illustrating a chip according to an embodiment of the present application.

### DETAILED DESCRIPTION OF THE EMBODIMENTS

To make those of ordinary skill in the art better understand the schemes of the present invention, the technical solutions in the embodiments of the present invention are clearly and completely described below with reference to appending drawings of the embodiments of the present invention. Obviously, the described embodiments are merely a part of embodiments of the present invention and are not all of the embodiments. Based on the embodiments of the present invention, other embodiments obtained by those of ordinary skill in the art without making any inventive effort are within the scope the present invention seeks to be protected.

It needs to be noted that in the specification, claims and accompanying drawings of the present invention, the terms "first", "second" and so on are intended to differentiate similar objects rather than to indicate a specific order. It should be understood that such used data can be exchanged with each other in suitable cases, so that the embodiments of the present invention described herein can be implemented in a sequence other than the sequences shown in the figures or described herein. Moreover, the terms "include", "have" and any variants thereof are intended to cover non-exclusive inclusion. For example, in the context of a process, method, system, product or device that includes a series of steps or units, the process, method, system, product or device is not necessarily limited to the clearly listed steps or units, and instead, includes other steps or units not specified clearly, or may include inherent steps or units of the process, method, product, or device.

Technical terms used in this application includes:
The Third Generation Partnership Project: 3GPP;
New Radio: NR;
Next Generation Node B: gNB;
User Equipment: UE;
Physical Uplink Control Channel: PUCCH;
Scheduling Request: SR.

The solutions of the embodiments of the present application may be applied to various communication systems, such as, a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a universal mobile telecommunications system (UMTS), a Worldwide Interoperability for Microwave Access (WiMAX) communication system or a 5G system, etc.

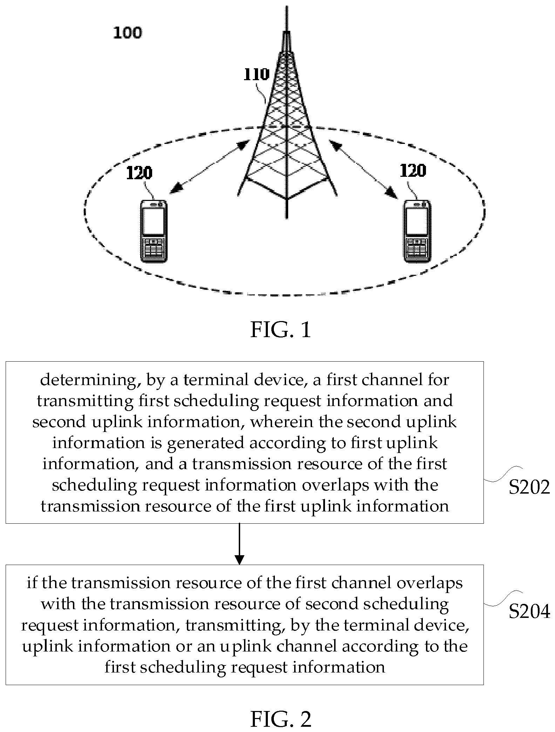

Exemplarily, a communication system 100 applied in an embodiment of the present application is illustrated in FIG. 1. The communication system 100 may include a network device 110, and the network device 110 may be a device communicating with a terminal device 120 (or called a communication terminal or a terminal). The network device 110 may provide communication coverage for a specific geographical region and may communicate with a terminal device under the coverage. Optionally, the network device 110 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Alternatively, the network device may be a mobile switching center, a relay station, an access point, a vehicle device, a wearable device, a hub, a switch, a network bridge, a router, a network-side device in a 5G network, a network device in a future evolved Public Land Mobile Network (PLMN) or the like.

The communication system 100 further includes at least one terminal device 120 located within the coverage area of the network device 110. A "terminal device" used herein includes, but not limited to, a device connected through a wired line connection, for example, through Public Switched Telephone Network (PSTN), Digital Subscriber Line (DSL), digital cable or direct cable; and/or a device connected with another data link/network; and/or a device connected through a wireless interface, for example, a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter; and/or a device configured by another terminal device to receive/send a communication signal; and/or an Internet of Things (IoT) device. A terminal device configured to communicate by a wireless interface may be called a "wireless communication terminal", a "wireless terminal" or a "mobile terminal". Examples of a mobile terminal include, but not limited to, a satellite or cellular telephone, a Personal Communication System (PCS) terminal capable of combining capabilities of a cellular radio telephone and data processing, faxing and data communication, a Personal Digital Assistant (PDA) capable of including a radio telephone, a pager, Internet/Intranet access, a Web browser, a notepad, a calendar and/or a Global Positioning System (GPS) receiver, and a conventional laptop and/or palmtop receiver or another electronic device including a radio telephone transceiver. The terminal device may refer to an access terminal, a user equipment (UE), a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal device in the 5G network, a terminal device in the future evolved PLMN or the like.

Optionally, device to device (D2D) communication may be performed between terminal devices 120.

Optionally, the 5G system or the 5G network may also be called an NR system or an NR network.

FIG. 1 exemplarily shows one network device and two terminal devices. Optionally, the communication system 100 may include a plurality of network devices and may include other numbers of terminal devices under the coverage of each network device. There is no limit made thereto in the embodiments of the application.

Optionally, the communication system 100 may further include other network entities such as a network controller and a mobility management entity (MME). There is no limit made thereto in the embodiments of the application.

It is to be understood that a device with a communication function in the network/system in the embodiments of the application may be called a communication device. For example, for the communication system 100 illustrated in FIG. 1, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity. There is no limit made thereto in the embodiments of the application.

It is to be understood that the terms "system" and "network" in this article may usually be exchanged in the application. In the application, the term "and/or" is only a kind of association for describing related objects and, which means that there can be three kinds of relationships, for example, A and/or B may represent three conditions, i.e., independent existence of A, existence of both A and B and independent existence of B. In addition, the character "/" in this article generally represents that previous and next associated objects form an "or" relationship.

In NR system:
On the basis of afore-mentioned related arts, how to solve the technical problem in the existing arts in which when an overlap occurs between two uplink channels, multiplexing for transmission is only supported for the information having the same priority, and the information with low priority will be discarded if the information having different priorities is to be transmitted, so as to reduce the probability of uplink information being discarded and improve transmission efficiency, is an important issue that needs to be solved at present.

Therefore, the embodiments of the present application propose a method for transmitting a scheduling request.

FIG. 2 is a schematic diagram illustrating a method for transmitting a scheduling request according to an embodiment of the present invention. As shown in FIG. 2, the method includes the following steps:
In Step S202, a terminal device determines a first channel for transmitting first scheduling request information and second uplink information, wherein the second uplink information is generated according to first uplink information, and a transmission resource of the first scheduling request information overlaps with the transmission resource of the first uplink information.

In the foregoing Step S202 of this application, the terminal device in the embodiments of the present application may include a terminal which realizes communication services via a communication protocol, for example, a smart phone, a tablet computer, a smart home appliance, a smart wearable device (e.g., a smart watch, a smart wristband, an AR device or a VR device), and etc.

At the terminal device side, by determining the first channel, the first scheduling request information and the second uplink information are multiplexed for transmission in the same channel, wherein the second uplink information is generated based on first uplink information. The transmission resource of the first scheduling request information overlaps the transmission resource of the first uplink information. Hence, in order to improve the transmission efficiency, different from discarding the information with low priority in the existing arts in the case that the transmission resources are overlapped, in the embodiment of the present application the second uplink information is generated according to the first uplink information, and the first scheduling request information and the second uplink information are transmitted together through the first channel.

Generating the second uplink information according to the first uplink information includes:
Approach 1: the second uplink information is a part of or all of the first uplink information. In a case that the transmission resource can satisfy uplink transmission of all of the first uplink information, the structure and content of the second uplink information are as the same as those of the first uplink information; or
   The second uplink information is a part of the first uplink information. By encoding a part of the first uplink information by coding the differences/the offset part, a receiving end can decode the encoded part of the first uplink information to recover the first uplink information without affecting the communication.
Approach 2: the second uplink information is the information obtained after the first uplink information is compressed.

Since the multiplexing is performed in the first channel to transmit the first scheduling request information and the second uplink information, the first uplink information is compressed to obtain the second uplink information in order to ensure communication quality. In such a way, an amount of data of a data stream in the uplink transmission are reduced.

It needs to be noted that the transmission resource of the first uplink information in an embodiment of the present application is a resource occupied by a physical channel used to carry the first uplink information.

In an embodiment of the present application, the first channel can be a physical channel that carries the first uplink information or can be a physical channel other than the physical channel that carries the first uplink information.

In Step S204, if the transmission resource of the first channel overlaps with the transmission resource of second scheduling request information, the terminal device transmits uplink information or an uplink channel according to the first scheduling request information.

In the foregoing Step S204 of this application, based on transmission of the first scheduling request information and the second uplink information through the first channel in Step S202, if the transmission resource of the first channel overlaps with the transmission resource of second scheduling request information, the smart phone needs to adjust by using the information transmitted in the first channel, and the way to adjust is to determine, based on the first scheduling request information, uplink information for transmission. Correspondingly, a network device will perform blind detection on the transmission resource of the first channel and the transmission resource of the second scheduling request information.

In an embodiment of the present invention, there may include three implementable ways to determine, based on the first scheduling request information, the uplink information for transmission.

Approach 1: based on the content of the first scheduling request information, the terminal determines the uplink information for transmission.

For example, in a case that the content of the first scheduling request information includes positive SR, the uplink information includes the first scheduling request information and the second uplink information; or
The content of the first scheduling request information is positive SR, and the priority of the first scheduling request information is higher than or equal to the priority of the second scheduling request information. Then, the uplink information includes the first scheduling request information, the second scheduling request information and the second uplink information.

Approach 2: based on the content of the first scheduling request information and the content of the second scheduling request information, the terminal device determines the uplink information for transmission.

For example, in a case that the content of the first scheduling request information is negative SR and the content of the second scheduling request information is negative SR, the uplink information includes the first scheduling request information, the second scheduling request information and the second upstream information; or

In a case that the content of the first scheduling request information is negative SR and the content of the second scheduling request information is positive SR, the uplink information includes the second scheduling request information.

Approach 3: based on priority information of the first scheduling request information and the content of the second scheduling request information, the terminal device determines the uplink information for transmission.

For example, the content of the second scheduling request information is positive SR, and the first scheduling request information corresponds to positive SR and has the highest priority among all of the scheduling request information transmitted in the first channel. Then, if the priority of the first scheduling request information is lower than the priority of the second scheduling request information, the terminal device transmits the second scheduling request information by using second scheduling request transmission resource.

Assuming that the first channel includes a plurality of pieces of scheduling request information and the first scheduling request information has the highest priority among all of scheduling requests, if the priority of the first scheduling request information is lower than the priority of the second scheduling request information and the content of the second scheduling request information is positive SR, then the second scheduling request information is transmitted by using the second scheduling request transmission resource; or
For example, the content of the second scheduling request information is positive SR, and the first scheduling request information corresponds to positive SR and has the highest priority among all of the scheduling request information transmitted in the first channel. Then, if the priority of the first scheduling request information is higher than or equal to the priority of the second scheduling request information, the terminal device transmits the first channel; or the terminal device transmits the first scheduling request information, the second scheduling request information and the second uplink information; or the terminal device transmits the first scheduling request information, the second scheduling request information and the second uplink information through the first channel.

Transmitting the information with different priorities in the same channel is adopted in the embodiments of the present invention. The terminal device determines the first channel for transmitting the first scheduling request information and the second uplink information, wherein the second uplink information is generated according to the first uplink information, and the transmission resource of the first scheduling request information overlaps with the transmission resource of the first uplink information. The transmission resource of the first channel overlaps with the transmission resource of the second scheduling request information. The terminal device transmits uplink information or uplink channel according to the first scheduling request information. This achieves the purpose of reducing the probability of uplink information being discarded, thereby realizing a technical effect of improving transmission efficiency and further solving the technical problem in the existing arts in which when an overlap occurs between two uplink channels, multiplexing for transmission is only supported for the information having the same priority, and the information with low priority will be discarded if the information having different priorities is to be transmitted, thus resulting in low transmission efficiency.

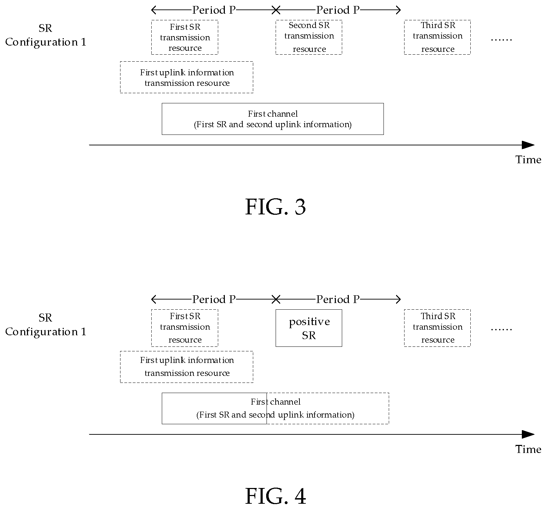

In an implementable embodiment, the method for transmitting the scheduling request provided in the embodiments of the present invention are illustrated in FIG. 3 and FIG. 4. FIG. 3 is a schematic diagram illustrating a type of scheduling request transmission in a method for transmitting a scheduling request according to an embodiment of the present invention. FIG. 4 is a schematic diagram illustrating another type of scheduling request transmission in a method for transmitting a scheduling request according to an embodiment of the present invention.

In this exemplary example, configuration information refers to scheduling request (SR) configuration 1, and the terminal device obtains periodic SR transmission resources based on the SR configuration 1, including the transmission resource of the first scheduling request information (represented by first SR transmission resource), the transmission resource of the second scheduling request information (represented by second SR transmission resource) and the transmission resource of the third scheduling request information (represented by third SR transmission resource), as shown in FIG. 3 and FIG. 4. In a case that the first SR transmission resource overlaps with the transmission resource of the first uplink information, if a constraint is met, the smart phone determines to multiplex the first scheduling request information (indicated as first SR in FIG. 3 and FIG. 4) and the second uplink information for transmission in the first channel.

In an embodiment of the present application, the constraint may include:
Condition 1: the priority of the SR configuration 1 is as the same as the priority of the first uplink information; or the priority of the SR configuration 1 is higher than the priority of the first uplink information (i.e., the priority of the first scheduling request information is different from the priority of the first uplink information in the embodiment of the present application).
Condition 2: a starting point of the resource with earlier start time among the transmission resource of the first scheduling request information and the transmission resource of the first uplink information meets a first constraint, where the first constraint may be a condition specified in communication protocol.

Optionally, as an embodiment, transmitting the uplink information or the uplink channel by the terminal device according to the first scheduling request information includes transmitting the uplink information or the uplink channel by the terminal device according to the content of the first scheduling request information; or transmitting the uplink information or the uplink channel by the terminal device according to the content of the first scheduling request information and the content of the second scheduling request information; or transmitting the uplink information or the uplink channel by the terminal device according to priority information of the first scheduling request information and the content of the second scheduling request information.

Above all, determining, by the smart phone, to multiplex the first scheduling request information (indicated as first SR in FIG. 3 and FIG. 4) and the second uplink information for transmission in the first channel includes the following examples:
Example 1: as shown in FIG. 3, if the content of the first scheduling request information (i.e., the first SR) transmitted in the first channel is positive SR, the terminal device transmits the first SR (positive) and the second uplink information through the first channel. That is, there is no need to consider the status of the second SR and the third SR.
   transmitting the uplink information by the terminal device according to the content of the first scheduling request information includes: transmitting the first channel by the terminal device if the content of the first scheduling request information is positive SR or SR, uplink channel; or transmitting the first scheduling request information and the second uplink information by the terminal device if the content of the first scheduling request information is positive SR; or transmitting the first scheduling request information and the second uplink information by the terminal device through the first channel if the content of the first scheduling request information is positive SR.
Example 2: as shown in FIG. 3, if the content of the first scheduling request information (i.e., the first SR) transmitted in the first channel is negative SR and the contents of the second scheduling request information and the third scheduling request information (i.e., the second SR and the third SR in FIG. 3) are also negative SR, the terminal device transmits the first SR (negative) and the second uplink information through the first channel.
   transmitting the uplink information or the uplink channel by the terminal device according to the content of the first scheduling request information and the content of the second scheduling request information includes: transmitting the first channel by the terminal device if the content of the first scheduling request information is negative SR and the content of the second scheduling request information is negative SR; or transmitting the first scheduling request information, the second scheduling request information and the second uplink information by the terminal device if the content of the first scheduling request information is negative SR and the content of the second scheduling request information is negative SR; or transmitting the first scheduling request information, the second scheduling request information and the second uplink information by the terminal device through the first channel if the content of the first scheduling request information is negative SR and the content of the second scheduling request information is negative SR.
Example 3: as shown in FIG. 4, if the content of the first scheduling request information (i.e., the first SR) transmitted in the first channel is negative SR and the content of the second SR (the same for the third SR) is positive SR, the terminal device transmits positive SR by using the transmission resource of the second SR and cancels, stops, or discards the transmission of the first channel.

If the content of the first scheduling request information is negative SR and the content of the second scheduling request information is positive SR, the terminal device transmits the second scheduling request information by using the transmission resource of the second scheduling request.

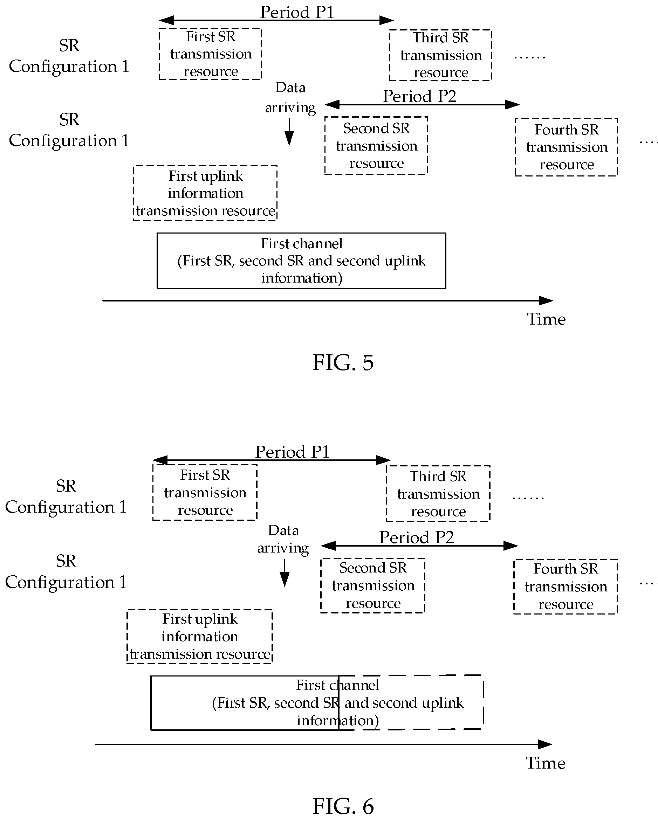

In another implementable embodiment, the method for transmitting the scheduling request provided in the embodiments of the present invention are illustrated in FIG. 5 and FIG. 6. FIG. 5 is a schematic diagram illustrating still another type of scheduling request transmission in a method for transmitting a scheduling request according to an embodiment of the present invention. FIG. 6 is a schematic diagram illustrating yet another type of scheduling request transmission in a method for transmitting a scheduling request according to an embodiment of the present invention.

In this exemplary example, configuration information refers to scheduling request (SR) configuration 1 and SR configuration 2, and the terminal device obtains periodic SR transmission resources based on the SR configuration 1 and the SR configuration 2, as shown in FIG. 5 and FIG. 6. The transmission resources of SR in the SR configuration 1 includes the transmission resource of the first scheduling request information (represented by first SR transmission resource) and the transmission resource of the third scheduling request information (represented by third SR transmission resource). The transmission resources of SR in the SR configuration 2 includes the transmission resource of the second scheduling request information (represented by second SR transmission resource) and the transmission resource of the fourth scheduling request information (represented by fourth SR transmission resource). In a case that the first SR transmission resource overlaps with the transmission resource of the first uplink information, if a constraint is met, the smart phone determines to multiplex the first scheduling request information (indicated as first SR in FIG. 5 and FIG. 6) and the second uplink information for transmission in the first channel. The first channel overlaps with the second SR transmission resource, and if a constraint is further met, the first SR, the second SR and the second scheduling request information are multiplexed for transmission.

Above all, determining, by the smart phone, to multiplex the first scheduling request information (indicated as first SR in FIG. 5 and FIG. 6), the second SR and the second uplink information for transmission in the first channel includes the following examples:

Example 1: as shown in FIG. 5, the priority of the first SR is higher than or equal to the priority of the second SR. When preparing content for being transmitted in the first channel (before transmission in the first channel), the terminal device determines that the first SR is positive and the second SR is negative. The first (positive) SR, the second (negative) SR and the second uplink information are transmitted in the first channel. But during the transmission in the first channel, there are data arriving for the SR configuration 2, that is, there is positive SR to be transmitted.

Furthermore, transmitting the uplink information or the uplink channel by the terminal device according to the priority information of the first scheduling request information and the content of the second scheduling request information includes: in a case that the content of the second scheduling request information is positive SR and the first scheduling request information corresponds to positive SR and has the highest priority among all of the scheduling request information transmitted in the first channel, if the priority of the first scheduling request information is higher than or equal to the priority of the second scheduling request information, transmitting the first channel by the terminal device; or transmitting the first scheduling request information, the second scheduling request information and the second uplink information by the terminal device; or transmitting the first scheduling request information, the second scheduling request information and the second uplink information by the terminal device through the first channel.

Example 2: as shown in FIG. 6, the priority of the first SR is lower than the priority of the second SR, and further, the priority of the second SR is equal to or higher than the priority of the first uplink information. When preparing content for being transmitted in the first channel (before transmission in the first channel), the terminal determines that the first SR is positive and the second SR is negative. The first (positive) SR, the second (negative) SR and the second uplink information are transmitted in the first channel. But during the transmission in the first channel, if there are data arriving for the SR configuration 2, that is, there is positive SR to be transmitted, then the terminal transmits positive SR by using the second SR transmission resource and cancels, stops or discards the transmission of the first channel.

Furthermore, transmitting the uplink information or the uplink channel by the terminal device according to the priority information of the first scheduling request information and the content of the second scheduling request information includes: in a case that the content of the second scheduling request information is positive SR and the first scheduling request information corresponds to positive SR and has the highest priority among all of the scheduling request information transmitted in the first channel, if the priority of the first scheduling request information is lower than the priority of the second scheduling request information, transmitting the second scheduling request information by the terminal device by using the second SR transmission resource.

Optionally, in an embodiment of the present application, the transmission resource of the second scheduling request information is after the transmission resource of the first scheduling request information; or the transmission resource of the second scheduling request information and the transmission resource of the first scheduling request information are different transmission resources obtained according to the same configuration information; or the transmission resource of the second scheduling request information and the transmission resource of the first scheduling request information are transmission resources obtained according to different configuration information.

As can be seen from the examples shown in FIGs. 3 to 6, taking the example shown in FIG. 3 for example, in time domain, the transmission resource of the second scheduling request information may be located after the transmission resource of the first scheduling request information.

Taking the example shown in FIG. 4 for example, in time domain, the transmission resource of the second scheduling request information and the transmission resource of the first scheduling request information are different transmission resources obtained according to the same configuration information.

Taking the examples shown in FIG. 5 and FIG. 6 for example, in time domain, the transmission resource of the second scheduling request information and the transmission resource of the first scheduling request information are transmission resources obtained according to different configuration information.

The method for transmitting the scheduling request provided in the embodiment of the present application provides a method that supports different priority information and multiplexing transmission of SR. By applying the method for transmitting the scheduling request provided in the embodiment of the present application, on the promise that the SR with high priority can be transmitted in time, the probability of uplink information being discarded is reduced to the greatest possible extent, thereby improving the transmission efficiency.

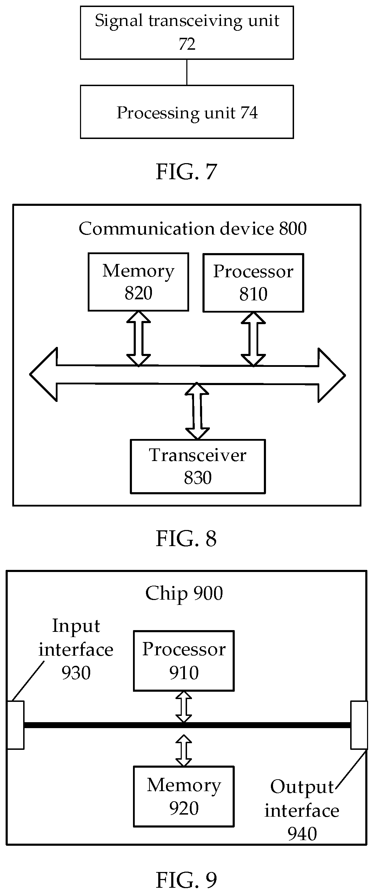

The method for transmitting the scheduling request according to the embodiment of the present application has been described in detail with reference to FIGs. 1 to 6. A terminal device according to an embodiment of the present application will be described below with reference to FIG. 7.

FIG. 7 is a schematic diagram illustrating a terminal device according to an embodiment of the present application. As shown in FIG. 7, the terminal device includes a signal transceiving unit 72 and a processing unit 74. The signal transceiving unit 72 is configured to determine a first channel for transmitting first scheduling request information and second uplink information, wherein the second uplink information is generated according to first uplink information, and a transmission resource of the first scheduling request information overlaps with the transmission resource of the first uplink information. The processing unit 74 is configured to transmit uplink information or an uplink channel according to the first scheduling request information if the transmission resource of the first channel overlaps with the transmission resource of second scheduling request information.

Optionally, as an embodiment, the processing unit 74 is further configured to transmit the uplink information or the uplink channel according to the content of the first scheduling request information; or transmit the uplink information or the uplink channel according to the content of the first scheduling request information and the content of the second scheduling request information; or transmit the uplink information or the uplink channel according to priority information of the first scheduling request information and the content of the second scheduling request information.

Further, optionally, as an embodiment, the signal transceiving unit 72 is further configured to transmit the first channel if the content of the first scheduling request information is positive scheduling request (SR); or transmit the first scheduling request information and the second uplink information if the content of the first scheduling request information is positive SR; or transmit the first scheduling request information and the second uplink information through the first channel if the content of the first scheduling request information is positive SR; or the signal transceiving unit 72 is further configured to transmit the first channel if the content of the first scheduling request information is positive SR and the priority of the first scheduling request information is higher than or equal to the priority of the second scheduling request information; or transmit the first scheduling request information, the second scheduling request information and the second uplink information if the content of the first scheduling request information is positive SR and the priority of the first scheduling request information is higher than or equal to the priority of the second scheduling request information; or transmit the first scheduling request information, the second scheduling request information and the second uplink information through the first channel if the content of the first scheduling request information is positive SR and the priority of the first scheduling request information is higher than or equal to the priority of the second scheduling request information.

Further, optionally, as an embodiment, the signal transceiving unit 72 is further configured to transmit the first channel if the content of the first scheduling request information is negative SR and the content of the second scheduling request information is negative SR; or transmit the first scheduling request information, the second scheduling request information and the second uplink information if the content of the first scheduling request information is negative SR and the content of the second scheduling request information is negative SR; or transmit the first scheduling request information, the second scheduling request information and the second uplink information through the first channel if the content of the first scheduling request information is negative SR and the content of the second scheduling request information is negative SR; or the signal transceiving unit 72 is further configured to transmit the second scheduling request information by using the transmission resource of the second scheduling request information if the content of the first scheduling request information is negative SR and the content of the second scheduling request information is positive SR.

Optionally, as an embodiment, the signal transceiving unit 72 is further configured to transmit, if the content of the second scheduling request information is positive SR and the first scheduling request information corresponds to positive SR and has the highest priority among all of scheduling request information transmitted in the first channel and if the priority of the first scheduling request information is lower than the priority of the second scheduling request information, the second scheduling request information by using the transmission resource of the second scheduling request information; or the signal transceiving unit 72 is further configured to transmit the first channel; or transmit the first scheduling request information, the second scheduling request information and the second uplink information; or transmit the first scheduling request information, the second scheduling request information and the second uplink information through the first channel, if the content of the second scheduling request information is positive SR and the first scheduling request information corresponds to positive SR and has the highest priority among all of scheduling request information transmitted in the first channel and if the priority of the first scheduling request information is higher than or equal to the priority of the second scheduling request information.

Optionally, as an embodiment, the transmission resource of the second scheduling request information is after the transmission resource of the first scheduling request information; or the transmission resource of the second scheduling request information and the transmission resource of the first scheduling request information are different transmission resources obtained according to same configuration information; or the transmission resource of the second scheduling request information and the transmission resource of the first scheduling request information are transmission resources obtained according to different configuration information.

Further, optionally, as an embodiment, the priority of the first scheduling request information is different from the priority of the first uplink information.

It is to be understood that the above-mentioned and other operations and/or functions of each unit in the terminal device according to the embodiment of the application are adopted to implement corresponding flows executed by the terminal device in the methods shown in FIGs. 1 to 6 respectively and will not be elaborated herein for simplicity.

FIG. 8 is a structural schematic diagram illustrating a communication device 800 provided in an embodiment of the present application. The communication device 800 shown in FIG. 8 includes a processor 810, wherein the processor 810 may call and run a computer program from a memory to implement a method in an embodiment of the present application.

Optionally, as shown in FIG. 8, the communication device 800 may further include a memory 820. The processor 810 may call and run a computer program from the memory 820 to implement the method in the embodiment of the present application.

The memory 820 may be a separate device independent of the processor 810 or may be integrated in the processor 810.

Optionally, as shown in FIG. 8, the communication device 800 may further include a transceiver 830, and the processor 810 may control the transceiver 830 to communicate with another device. Specifically, information or data may be sent to another device, or information or data sent by another device is received.

The transceiver 830 may include a transmitter and a receiver. The transceiver 830 may further include antennas, wherein the number of antennas may be one or more.

Optionally, the communication device 800 may be a network device according to an embodiment of the present application, and the communication device 800 may implement corresponding processes implemented by the network device in various methods of embodiments of the present application, which will not be repeated here for the sake of brevity.

Optionally, the communication device 800 may be a mobile terminal/terminal device according to an embodiment of the present application, and the communication device 800 may implement corresponding processes implemented by the mobile terminal/ the terminal device in various methods of the embodiments of the present application, which will not be repeated here for the sake of brevity.

FIG. 9 is a structural schematic diagram illustrating a chip according to an embodiment of the present application. The chip 900 shown in FIG. 9 includes a processor 910, wherein the processor 910 may call and run a computer program from a memory to implement the method in the embodiment of the present application.

Optionally, as shown in FIG. 9, the chip 900 may further include a memory 920. The processor 910 may call and run a computer program from the memory 920 to implement the method in the embodiment of the present application.

The memory 920 may be a separate device independent of the processor 910 or may be integrated in the processor 910.

Optionally, the chip 900 may further include an input interface 930. The processor 910 may control the input interface 930 to communicate with other devices or chips, in particular, to acquire information or data transmitted by other devices or chips.

Optionally, the chip 900 may further include an output interface 940. The processor 910 may control the output interface 940 to communicate with other devices or chips, in particular, to output information or data to other devices or chips.

Optionally, the chip can be applied to the network device in the embodiment of the present application; moreover, the chip may perform corresponding processes implemented by the network device in each of the methods of the embodiment of the present application. For brevity, details will not be described herein again.

Optionally, the chip can be applied to the mobile terminal/ the terminal device in the embodiment of the present application; moreover, the chip may perform corresponding processes implemented by the mobile terminal/ the terminal device in each of the methods of the embodiment of the present application. For brevity, details will not be described herein again.

It should be understood that the chip mentioned in the embodiments of the present application can be called a system-level chip, a system-on-chip, a chip system.

It is to be understood that the processor of the embodiment of the present application may be an integrated circuit chip with signal processing capabilities. In the implementation process, each step of the foregoing method embodiment may be completed by an integrated logic circuit in the processor or instructions in a form of software. The foregoing processor may be a general-purpose processor, a digital signal processor (DSP), an application specific integrated circuit (ASIC), a field programmable gate array (FPGA), or other programmable logic device, discrete gate, or a transistor logic device, or a discrete hardware component. The methods, steps, and logical block diagrams disclosed in the embodiments of the present application can be implemented or executed. The general-purpose processor may be a microprocessor or the processor may also be any conventional processor, or the like. The steps of the method disclosed in the embodiments of the present application may be directly implemented by the hardware decoding processor, or may be performed by a combination of hardware and software modules in the decoding processor. The software module may be located in a conventional storage medium in the art, such as a random access memory, a flash memory, a read only memory, a programmable read only memory or an electrically erasable programmable memory, and a register. The storage medium is located in the memory, and the processor reads the information in the memory and completes the steps of the above method in combination with its hardware.

It is understood that the memory in the embodiments of the present application may be a volatile memory or a non-volatile memory, or may include both volatile and non-volatile memory. Suitable non-volatile memories may include read only memory (ROM), programmable ROM (PROM), erasable programmable ROM (EPROM), electrically erasable programmable ROM (EEPROM), or flash memory. Volatile memories may include random access memory (RAM), which acts as an external cache. By way of example, but not limitation, many forms of RAM are available, such as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory of the systems and methods described herein may include, but not limited to, these and any other suitable types of memory.

It is to be understood that foregoing memory is exemplary but not limited, and for example, the memory in the embodiments of the present application may also be as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synchlink DRAM (SLDRAM) or a Direct Rambus RAM (DR RAM). That is, the memory in the embodiments of the present application includes, but is not limited to, these and any other suitable types of memory.

The embodiment of the present application further provides a computer readable storage medium for storing a computer program.

Optionally, the computer readable storage medium can be applied to the network device in the embodiment of the present application; moreover, the computer readable storage medium enables a computer to execute corresponding processes implemented by the network device in each of the methods of the embodiment of the present application. For brevity, details will not be described herein again.

Optionally, the computer readable storage medium can be applied to the mobile terminal/ the terminal device in the embodiment of the present application; moreover, the computer readable storage medium enables a computer to execute corresponding processes implemented by the mobile terminal/ the terminal device in each of the methods of the embodiment of the present application. For brevity, details will not be described herein again.

The embodiment of the present application further provides a computer program product including computer program instructions.

Optionally, the computer program product can be applied to the network device in the embodiment of the present application; moreover, the computer program product enables a computer to execute corresponding processes implemented by the network device in each of the methods of the embodiment of the present application. For brevity, details will not be described herein again.

Optionally, the computer program product can be applied to the mobile terminal/ the terminal device in the embodiment of the present application; moreover, the computer program product enables a computer to execute corresponding processes implemented by the mobile terminal/ the terminal device in each of the methods of the embodiment of the present application. For brevity, details will not be described herein again.

The embodiment of the present application further provides a computer program.

Optionally, the computer program can be applied to the network device in the embodiment of the present application; moreover, the computer program enables a computer to execute corresponding processes implemented by the network device in each of the methods of the embodiment of the present application. For brevity, details will not be described herein again.

Optionally, the computer program can be applied to the mobile terminal/ the terminal device in the embodiment of the present application; moreover, the computer program enables a computer to execute corresponding processes implemented by the mobile terminal/ the terminal device in each of the methods of the embodiment of the present application. For brevity, details will not be described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Professional technicians can use different methods to implement the described functions for each specific application, but such implementation should not be considered to be beyond the scope of the present application.

It may be clearly understood by a person skilled in the art that, for ease and brevity of description, for a detailed working process of the foregoing system, apparatus, and unit, reference may be made to a corresponding process in the foregoing embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the presented or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts presented as units may or may not be physical units, may be located in one position, or may be distributed on a plurality of network units. Some or all of the units may be selected according to actual requirements to achieve the purposes of the solutions of the embodiments.

In addition, the functional units in various implementations of the present disclosure may be integrated into one processing unit, or each unit may be physically present, or two or more units may be integrated into one unit.

When the functions are implemented in the form of a software functional unit and sold or used as an independent product, the functions may be stored in a computer-readable storage medium. Based on such an understanding, the technical solutions of the present application essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the method described in each of the embodiments of the application. The foregoing storage medium includes any medium that can store program code, such as a USB flash drive, a removable hard disk, a Read-Only Memory (ROM), a Random Access Memory (RAM), a magnetic disk, or an optical disc.

The foregoing description is only a specific implementation manner of the present application. The protection scope of the present application, however, is not limited thereto. Various modifications or replacements may be readily conceivable to any person skilled in the art within the technical scope disclosed in the present application, and such modifications or replacements shall fall within the protection scope of the present application. Therefore, the protection scope of the present application shall be subject to the protection scope of the claims.

## Claims

1. An uplink transmission method, comprising:
determining, by a terminal device, a first channel for transmitting first scheduling request information and second uplink information, wherein the second uplink information is generated according to first uplink information, and a transmission resource of the first scheduling request information overlaps with the transmission resource of the first uplink information; and
if the transmission resource of the first channel overlaps with the transmission resource of second scheduling request information, transmitting, by the terminal device, uplink information or an uplink channel according to the first scheduling request information.

2. The method of claim 1, wherein the transmitting, by the terminal device, the uplink information or the uplink channel according to the first scheduling request information comprises:
transmitting the uplink information or the uplink channel by the terminal device according to the content of the first scheduling request information; or
transmitting the uplink information or the uplink channel by the terminal device according to the content of the first scheduling request information and the content of the second scheduling request information; or
transmitting the uplink information or the uplink channel by the terminal device according to priority information of the first scheduling request information and the content of the second scheduling request information.

3. The method of claim 2, wherein the transmitting, by the terminal device, the uplink information or the uplink channel according to the first scheduling request information comprises:
transmitting the first channel by the terminal device if the content of the first scheduling request information is positive scheduling request (SR); or
transmitting the first scheduling request information and the second uplink information by the terminal device if the content of the first scheduling request information is positive SR; or
transmitting the first scheduling request information and the second uplink information by the terminal device through the first channel if the content of the first scheduling request information is positive SR; or
transmitting the first channel by the terminal device if the content of the first scheduling request information is positive SR and the priority of the first scheduling request information is higher than or equal to the priority of the second scheduling request information; or
transmitting the first scheduling request information, the second scheduling request information and the second uplink information by the terminal device if the content of the first scheduling request information is positive SR and the priority of the first scheduling request information is higher than or equal to the priority of the second scheduling request information; or
transmitting the first scheduling request information, the second scheduling request information and the second uplink information by the terminal device through the first channel if the content of the first scheduling request information is positive SR and the priority of the first scheduling request information is higher than or equal to the priority of the second scheduling request information.

4. The method of claim 2, wherein the transmitting, by the terminal device, the uplink information or the uplink channel according to the content of the first scheduling request information and the content of the second scheduling request information comprises:
transmitting the first channel by the terminal device if the content of the first scheduling request information is negative SR and the content of the second scheduling request information is negative SR; or
transmitting the first scheduling request information, the second scheduling request information and the second uplink information by the terminal device if the content of the first scheduling request information is negative SR and the content of the second scheduling request information is negative SR; or
transmitting the first scheduling request information, the second scheduling request information and the second uplink information by the terminal device through the first channel if the content of the first scheduling request information is negative SR and the content of the second scheduling request information is negative SR; or
transmitting the second scheduling request information by the terminal device by using the transmission resource of the second scheduling request information if the content of the first scheduling request information is negative SR and the content of the second scheduling request information is positive SR.

5. The method of claim 2, wherein the transmitting, by the terminal device, the uplink information or the uplink channel according to the content of the first scheduling request information and the content of the second scheduling request information comprises:
if the content of the second scheduling request information is positive SR and the first scheduling request information corresponds to positive SR and has the highest priority among all of scheduling request information transmitted in the first channel and if the priority of the first scheduling request information is lower than the priority of the second scheduling request information, transmitting the second scheduling request information by the terminal device by using the transmission resource of the second scheduling request information; or
if the content of the second scheduling request information is positive SR and the first scheduling request information corresponds to positive SR and has the highest priority among all of scheduling request information transmitted in the first channel and if the priority of the first scheduling request information is higher than or equal to the priority of the second scheduling request information, transmitting the first channel by the terminal device; or transmitting the first scheduling request information, the second scheduling request information and the second uplink information by the terminal device; or transmitting the first scheduling request information, the second scheduling request information and the second uplink information by the terminal device through the first channel.

6. The method of any of claims 1 to 5, wherein:
the transmission resource of the second scheduling request information is after the transmission resource of the first scheduling request information; or
the transmission resource of the second scheduling request information and the transmission resource of the first scheduling request information are different transmission resources obtained according to same configuration information; or
the transmission resource of the second scheduling request information and the transmission resource of the first scheduling request information are transmission resources obtained according to different configuration information.

7. The method of claim 6, wherein the priority of the first scheduling request information is different from the priority of the first uplink information.

8. A terminal device, comprising a signal transceiving unit and a processing unit,
the signal transceiving unit, configured to determine a first channel for transmitting first scheduling request information and second uplink information, wherein the second uplink information is generated according to first uplink information, and a transmission resource of the first scheduling request information overlaps with the transmission resource of the first uplink information; and
the processing unit, configured to transmit uplink information or an uplink channel according to the first scheduling request information if the transmission resource of the first channel overlaps with the transmission resource of second scheduling request information.

9. The terminal device of claim 8, wherein:
the processing unit is further configured to transmit the uplink information or the uplink channel according to the content of the first scheduling request information; or transmit the uplink information or the uplink channel according to the content of the first scheduling request information and the content of the second scheduling request information; or transmit the uplink information or the uplink channel according to priority information of the first scheduling request information and the content of the second scheduling request information.

10. The terminal device of claim 9, wherein:
the signal transceiving unit is further configured to transmit the first channel if the content of the first scheduling request information is positive scheduling request (SR); or transmit the first scheduling request information and the second uplink information if the content of the first scheduling request information is positive SR; or transmit the first scheduling request information and the second uplink information through the first channel if the content of the first scheduling request information is positive SR; or
the signal transceiving unit is further configured to transmit the first channel if the content of the first scheduling request information is positive SR and the priority of the first scheduling request information is higher than or equal to the priority of the second scheduling request information; or transmit the first scheduling request information, the second scheduling request information and the second uplink information if the content of the first scheduling request information is positive SR and the priority of the first scheduling request information is higher than or equal to the priority of the second scheduling request information; or transmit the first scheduling request information, the second scheduling request information and the second uplink information through the first channel if the content of the first scheduling request information is positive SR and the priority of the first scheduling request information is higher than or equal to the priority of the second scheduling request information.

11. The terminal device of claim 9, wherein:
the signal transceiving unit is further configured to transmit the first channel if the content of the first scheduling request information is negative SR and the content of the second scheduling request information is negative SR; or transmit the first scheduling request information, the second scheduling request information and the second uplink information if the content of the first scheduling request information is negative SR and the content of the second scheduling request information is negative SR; or transmit the first scheduling request information, the second scheduling request information and the second uplink information through the first channel if the content of the first scheduling request information is negative SR and the content of the second scheduling request information is negative SR; or
the signal transceiving unit is further configured to transmit the second scheduling request information by using the transmission resource of the second scheduling request information if the content of the first scheduling request information is negative SR and the content of the second scheduling request information is positive SR.

12. The terminal device of claim 9, wherein:
the signal transceiving unit is further configured to transmit, if the content of the second scheduling request information is positive SR and the first scheduling request information corresponds to positive SR and has the highest priority among all of scheduling request information transmitted in the first channel and if the priority of the first scheduling request information is lower than the priority of the second scheduling request information, the second scheduling request information by using the transmission resource of the second scheduling request information; or
the signal transceiving unit is further configured to transmit the first channel; or transmit the first scheduling request information, the second scheduling request information and the second uplink information; or transmit the first scheduling request information, the second scheduling request information and the second uplink information through the first channel, if the content of the second scheduling request information is positive SR and the first scheduling request information corresponds to positive SR and has the highest priority among all of scheduling request information transmitted in the first channel and if the priority of the first scheduling request information is higher than or equal to the priority of the second scheduling request information.

13. The terminal device of any of claims 8 to 12, wherein:
the transmission resource of the second scheduling request information is after the transmission resource of the first scheduling request information; or
the transmission resource of the second scheduling request information and the transmission resource of the first scheduling request information are different transmission resources obtained according to same configuration information; or
the transmission resource of the second scheduling request information and the transmission resource of the first scheduling request information are transmission resources obtained according to different configuration information.

14. The terminal device of claim 13, wherein the priority of the first scheduling request information is different from the priority of the first uplink information.

15. A terminal device, comprising a processor and a memory, wherein the memory is configured to store a computer program, and the processor is configured to call and run the computer program stored in the memory to execute the method of any of claims 1 to 7.

16. A non-transitory storage medium, comprising a stored program, wherein when the program is running, a device equipped with the non-transitory storage medium is controlled to execute the uplink transmission method of any of claims 1 to 7.
